# FASCICULE DE BREVET EUROPEEN

(11) **EP 3 103 115 B1**
(45) Date de publication et mention de la délivrance du brevet: **24.04.2019**
(21) Numéro de dépôt: 15703020.6
(22) Date de dépôt: 28.01.2015
(51) Int. Cl.: G10K 11/165, G10K 11/168, B64C 1/40, G10K 11/172

(54) **PANNEAU INSONORISANT**
SCHALLDICHTE PLATTE
SOUNDPROOF PANEL

(30) Priorité: 04.02.2014 FR 1400313
(43) Date de publication de la demande: 14.12.2016
(73) Titulaire: Office National d'Etudes et de Recherches Aérospatiales (ONERA), 91120 Palaiseau (FR); Ateca, 82000 Montauban (FR)
(72) Inventeur: SIMON, Frank, F-31300 Toulouse (FR); BRIAN, Jean-Luc, F-82800 Montricoux (FR); FASCIO, Valia, F-82000 Montauban (FR); VIÉ, Philippe, F-31270 Cugnaux (FR)
(74) Mandataire: Cabinet Plasseraud
(86) Numéro de dépôt international: PCT/EP2015/051642
(87) Numéro de publication internationale: WO 2015/117868

(56) Documents cités:
- WO-A1-03/078740
- WO-A1-2011/048484
- FR-A1- 2 943 000
- US-A- 4 667 768
- US-A1- 2010 148 001

## Description

La présente invention concerne un panneau insonorisant qui est efficace en transmission et qui possède une structure sandwich.

De tels panneaux existent déjà avant la présente invention et comprennent :
- deux parois externes qui sont parallèles l'une à l'autre ;
- une âme, qui est connectée rigidement aux parois externes de sorte que des contraintes de cisaillement soient transmises entre cette âme et chacune des parois externes, et l'âme maintenant les parois externes à distance l'une de l'autre de façon à limiter un espace intermédiaire ; et
- des éléments modificateurs qui sont contenus dans l'espace intermédiaire, et maintenus par l'âme à des emplacements qui sont fixes par rapport à des directions parallèles aux parois externes.

Une onde acoustique qui est incidente sur l'une des parois externes d'un tel panneau est transformée en une vibration stationnaire du panneau par flexion, cette vibration stationnaire étant une superposition de modes propres du panneau qui sont excités par l'onde acoustique incidente. Alors, l'onde acoustique transmise, qui émerge à partir de l'autre paroi externe, résulte de contributions d'émission qui sont générées par les modes propres excités.

De façon générale avant la présente invention, l'efficacité d'atténuation acoustique en transmission d'un tel panneau est obtenue en utilisant des éléments modificateurs à fonction de lest, ou en utilisant des éléments modificateurs qui sont capables d'absorber de l'énergie de vibration du panneau par flexion, ou encore qui sont capables de modifier la raideur du panneau. Eventuellement, plusieurs de ces effets sont combinés en choisissant des éléments modificateurs appropriés.

Par exemple, le document FR 2 815 603 décrit un tel panneau dans lequel l'âme est constituée par une structure en nid d'abeille, et les alvéoles de cette structure sont remplies de corps solides pleins ou creux. L'amortissement acoustique est alors obtenu par friction des corps solides entre eux, ou contre les parois externes, ou encore contre la structure en nid d'abeille. Mais un tel panneau insonorisant est particulièrement lourd, car l'espace intermédiaire entre ses parois externes est rempli par les corps solides.

Le document WO 2006/128632 décrit un autre panneau qui possède la structure sandwich rappelée ci-dessus, et dans lequel des évidements sont aménagés à l'intérieur de l'âme pour que le panneau ait un comportement monobloc à basse fréquence acoustique, et un comportement de double-paroi pour les hautes fréquences acoustiques. Mais un tel panneau est plus onéreux à cause de la réalisation des évidements dans l'âme, en respectant des dimensions appropriées pour ces évidements.

Le document US2010/148001 décrit un autre panneau dans lequel des éléments modificateurs sont contenus dans l'espace intermédiaire d'une structure à sandwich, la répartition des éléments est uniforme et périodique sur la surface parallèle aux parois du panneau et les caractéristiques des éléments modificateurs sont choisies pour obtenir une absorption uniforme sur une large bande de fréquences et un poids réduit.

A partir de cette situation, la présente invention a pour but de proposer de nouveaux panneaux insonorisants qui présentent un meilleur compromis entre l'efficacité d'atténuation acoustique en transmission, le poids des panneaux, leur coût de fabrication, et l'encombrement qu'ils produisent. En particulier lorsqu'ils sont destinés à une utilisation à bord d'avions ou d'aéronefs, la masse ajoutée que constitue chaque panneau embarqué est une contrainte très importante.

Pour atteindre ces buts ou d'autres, la présente invention, conformément à la revendication 1, propose un panneau insonorisant à deux parois externes, âme et éléments modificateurs tel que décrit précédemment, mais dans lequel les emplacements des éléments modificateurs forment, en projection sur une surface parallèle aux parois externes, une répartition fractale avec un motif de base qui est mis en oeuvre au moins une fois par auto-similarité. Autrement dit, la valeur d'ordre fractal correspondante est supérieure ou égale à l'unité. En outre, la répartition fractale est telle que des modes propres de vibration du panneau par flexion, dits modes concentrés, n'ont des ventres de vibration dont les amplitudes ne sont pas nulles qu'à l'intérieur d'une zone restreinte du panneau qui est circonscrite par certains au moins des éléments modificateurs contribuant à la répartition fractale. Alors, l'onde acoustique qui est transmise ne résulte que de contributions d'émission qui sont générées à l'intérieur de la zone restreinte du panneau lorsque les modes propres excités sont tous des modes concentrés.

Ainsi, pour un panneau selon l'invention, la surface qui est effective pour produire l'onde transmise est restreinte à une portion du panneau qui est plus petite que celui-ci, si bien que l'énergie rayonnante de l'onde acoustique qui est transmise est diminuée en conséquence.

Par ailleurs, les ventres des modes propres qui participent réellement à la production de l'onde transmise étant contenus uniquement à l'intérieur de la zone restreinte, un effet d'interférence destructrice devient plus important, entre les contributions d'émission de deux ventres d'un même mode propre qui sont voisins. Cet effet contribue de façon supplémentaire à réduire l'énergie rayonnante de l'onde transmise.

Les ondes incidentes et transmises qui sont considérées peuvent avoir des directions de propagation respectives qui sont identiques ou non en fonction de la directivité de l'atténuation qui est recherchée.

L'efficacité d'atténuation acoustique en transmission pour un panneau insonorisant selon l'invention n'est donc pas basée sur un effet d'augmentation de masse, ou effet de lest, ni sur un effet d'absorption de l'énergie de vibration du panneau par flexion, mais sur une répartition particulière des éléments modificateurs, de type fractale. Cette répartition particulière contrôle les amplitudes des ventres de vibration du panneau par flexion. En particulier, les ventres qui sont effectifs pour produire l'onde transmise, c'est-à-dire ceux dont l'amplitude de vibration est non-nulle dans le mode propre auquel chacun d'eux appartient, sont limités à l'intérieur de la zone restreinte. Cette zone est restreinte par la répartition fractale des éléments modificateurs, en étant entourée par certains de ces éléments. Ceux des ventres de chaque mode propre de vibration du panneau par flexion qui sont situés en dehors de cette zone restreinte, ont des amplitudes de vibration qui sont nulles, si bien qu'ils ne contribuent pas à la production de l'onde qui est transmise.

Dans un panneau insonorisant qui est conforme à l'invention, les éléments modificateurs peuvent n'occuper qu'une fraction faible de l'espace intermédiaire entre les parois externes, et ces éléments peuvent eux-mêmes avoir une masse individuelle qui est limitée. Le poids total du panneau peut ainsi être réduit.

En outre un tel panneau insonorisant peut être produit à faible coût, en utilisant des composants peu onéreux et des procédés d'élaboration du panneau qui sont simples.

Eventuellement, la restriction de la surface du panneau qui est effective pour produire l'onde transmise, et l'effet d'interférences destructives pour l'onde acoustique transmise, pour un panneau selon l'invention, peuvent être combinés avec des effets supplémentaires d'amortissement par absorption d'une partie de l'énergie de vibration du panneau par flexion. Toutefois, l'efficacité par amortissement sera en général très inférieure à l'efficacité des effets de la répartition fractale. De même, un possible effet de lest par les éléments modificateurs sera aussi très inférieur aux effets de la répartition fractale.

Dans divers modes de réalisation de l'invention, les perfectionnements suivants peuvent être adoptés, notamment pour réaliser les buts de l'invention dans une mesure supérieure :
- le motif de base pour la répartition fractale des éléments modificateurs, peut être mis en oeuvre par auto-similarité au moins deux fois, de préférence au moins trois fois, correspondant à une valeur de l'ordre fractal qui est supérieure ou égale à deux, de préférence trois ;
- ce motif de base peut être un motif de Vicsek ou un motif de Sierpinski ;
- les éléments modificateurs peuvent comprendre des sphères, de préférence des sphères creuses, des éléments à ressorts, ou des portions de matériau viscoélastique ;
- l'âme peut posséder une structure alvéolaire, et dans ce cas les éléments modificateurs peuvent être contenus dans une sélection restreinte des alvéoles de la structure, cette sélection d'alvéoles formant la répartition fractale des éléments modificateurs ;
- l'âme peut posséder une structure en nid d'abeille ; et
- le panneau peut être courbe dans au moins une direction qui est parallèle à ce panneau.

Un tel panneau insonorisant peut être adapté pour former tout ou partie d'un habillage interne d'habitacle ou de cabine. En particulier, il peut être adapté pour être disposé à l'intérieur d'une cabine d'avion ou d'un habitable d'aéronef à voilure tournante.

D'autres particularités et avantages de la présente invention apparaîtront dans la description ci-après d'exemples de réalisation non limitatifs, en référence aux dessins annexés, dans lesquels :
- la figure 1 est une vue en coupe d'un panneau insonorisant conforme à l'invention ;
- les figures 2a et 2b sont des vues en plan de panneaux insonorisants qui sont conformes à l'invention, et pour lesquels un motif de base de Sierpinski a été mis en oeuvre avec une valeur d'ordre fractal qui est égale à l'unité pour la figure 2a, et égale à trois pour la figure 2b ;
- la figure 3 est une vue en plan d'un autre panneau insonorisant qui est conforme à l'invention, et pour lequel un motif de base de Vicsek a été mis en oeuvre avec une valeur d'ordre fractal égale à trois ;
- la figure 4a est une vue en plan d'encore un autre panneau insonorisant conforme à l'invention, et la figure 4b représente un mode propre de vibration par flexion pour le panneau de la figure 4a ;
- la figure 5 est un diagramme d'atténuation acoustique, pour trois panneaux insonorisants conformes à l'invention et pour deux panneaux insonorisants tels qu'existant avant l'invention ; et
- la figure 6 est un diagramme montrant le gain d'atténuation acoustique de quatre panneaux insonorisants conformes à l'invention, par rapport à l'un des deux panneaux insonorisants existant avant l'invention et utilisé pour la figure 4.

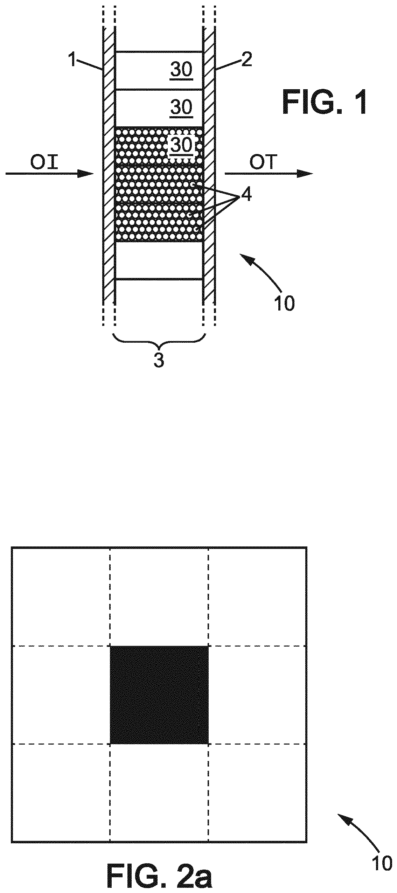

Pour raison de clarté, les dimensions de certains éléments qui sont représentés dans la figure 1 ne correspondent ni à des dimensions réelles ni à des rapports de dimensions réels. En outre, des références identiques qui sont indiquées dans des figures différentes désignent des éléments identiques ou qui ont des fonctions identiques.

Conformément à la figure 1, le panneau insonorisant 10 comprend les deux parois externes 1 et 2, et l'âme 3 qui est située entre celles-ci. Chaque paroi 1, 2 peut être individuellement d'un type et d'une composition connus avant la présente invention, notamment tel que disponible commercialement. De préférence les parois 1 et 2 sont à base d'au moins un matériau composite. Leur forme périphérique peut être quelconque : carrée, rectangulaire, trapézoïdale, triangulaire, ronde, etc, en fonction de l'utilisation du panneau 10. Eventuellement, les parois 1 et 2 peuvent comporter des ouvertures, et/ou être préformées avec une courbure générale. L'âme 3 peut être constituée d'une structure en nid d'abeille, par exemple en aluminium ou en alliage d'aluminium, ou encore en papier aramidique imprégné d'une résine phénolique, tel que le produit qui est désigné commercialement par Nomex®. L'axe de la structure en nid d'abeille peut être perpendiculaire aux parois 1 et 2. En outre, l'âme 3 peut être collée aux deux parois 1 et 2, sur les surfaces de celles-ci qui sont tournées vers l'intérieur du panneau 10. Les alvéoles de la structure en nid d'abeille, qui sont référencées 30 dans la figure 1, peuvent avoir des dimensions comprises entre 0,4 cm et 3 cm (centimètre) parallèlement aux parois 1 et 2, et l'âme 3 peut avoir une épaisseur comprise entre 0,5 cm et 4 cm perpendiculairement aux parois 1 et 2.

La figure 1 montre aussi une onde acoustique incidente OI qui arrive en provenance du côté gauche sur la paroi externe 1, et une onde acoustique OT qui est transmise par le panneau 10 à partir de l'onde incidente OI, vers la droite du panneau 10. Les deux ondes acoustiques OI et OT peuvent avoir des directions de propagation respectives qui sont identiques.

Pour qu'un tel panneau 10 en sandwich vibre efficacement par flexion, notamment à des fréquences qui correspondent au domaine des fréquences acoustiques, il est nécessaire que des contraintes de cisaillement soient transmises entre la paroi externe 1 et l'âme 3, et aussi entre l'âme 3 et la paroi externe 2. On entend par contrainte de cisaillement des contraintes qui tendent à déplacer chaque paroi 1, 2 par rapport à l'âme 3, parallèlement aux parois 1 et 2 elles-mêmes. Pour cela, l'assemblage entre chaque paroi 1, 2 et l'âme 3 doit être suffisamment rigide, et des méthodes d'assemblage qui sont connues de l'homme du métier conviennent, telles que des méthodes de collage.

Des éléments modificateurs 4 sont contenus dans une sélection des alvéoles 30, et la façon de sélectionner celles des alvéoles 30 qui contiennent ainsi des éléments 4 est une des caractéristiques de l'invention. Les éléments modificateurs 4 peuvent être de différentes natures, tels que des sphères pleines, des sphères creuses, des sphères dures, des sphères souples, des éléments à ressorts, ou des blocs en matériau viscoélastique aussi appelés «silent-blocks». Toutefois, ceux de ces éléments modificateurs 4 qui aboutissent à un compromis amélioré entre la réduction du poids et l'amortissement acoustique pour le panneau 10, sont préférés. En particulier, des panneaux selon l'invention qui sont efficaces acoustiquement et qui ont un poids total réduit ont été réalisés en utilisant des sphères creuses.

Dans un panneau insonorisant 10 selon l'invention, les éléments modificateurs 4 interviennent en produisant une altération locale de la capacité du panneau à vibrer par flexion. Pour cela, ils modifient localement certains paramètres du panneau 10 qui interviennent dans les vibrations de celui-ci par flexion. En particulier, les éléments modificateurs 4 peuvent changer localement les valeurs de la densité apparente du panneau 10, de son taux d'absorption de l'énergie de vibration, etc, entre des zones où se trouvent des éléments modificateurs et des zones qui en sont dépourvues. Plus précisément, une onde de flexion qui se propage dans la surface du panneau 10 est partiellement réfléchie à la limite entre deux zones qui sont contigües et dont l'une contient des éléments modificateurs 4 mais pas l'autre. La structure d'onde stationnaire qui résulte de telles réflexions, en plus des réflexions sur les limites périphériques du panneau 10, peut être adaptée quant aux amplitudes de vibration des ventres de vibration par flexion, lorsque la répartition des éléments modificateurs 4 est de type fractal. En effet, une telle répartition fractale a la capacité de déterminer ces amplitudes des ventres de vibration par flexion du panneau, notamment par l'intermédiaire de la taille du motif de base qui est utilisé pour générer la répartition fractale, la géométrie du motif lui-même, le nombre de répétitions du motif par auto-similarité, ou valeur d'ordre fractal, et sa position d'ensemble par rapport au panneau.

Dans le mode de réalisation de la figure 2a, le panneau insonorisant 10 possède un bord périphérique de forme carrée, et un motif de répartition fractale dit «de Sierpinski» a été utilisé une seule fois. Ce motif est construit de la façon suivante : chaque côté du carré est divisé en trois segments égaux, de sorte que la surface du panneau 10 soit divisée en neuf carrés de mêmes surfaces. L'âme 3 du panneau 10, qui est constituée du nid d'abeille dans l'exemple considéré, est alors remplie avec des éléments modificateurs 4 dans le carré central, noirci sur la figure 2a, sans mettre d'éléments modificateurs dans les huit carrés périphériques. L'ordre fractal de la répartition des éléments modificateurs est ainsi égal à l'unité, et le taux de remplissage surfacique du panneau avec des éléments modificateurs est 1/9=0,111.

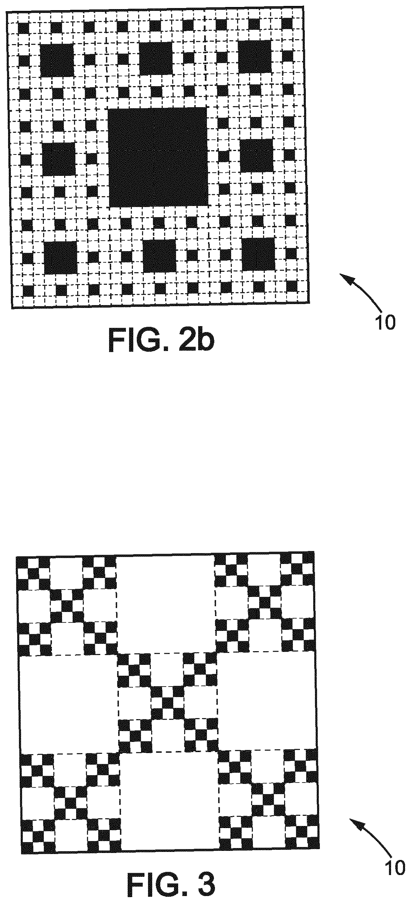

Ce motif de base de Sierpinski peut alors être mis en oeuvre à nouveau, à l'intérieur de chacun des huit carrés périphériques qui viennent d'être introduits en référence au panneau 10 de la figure 2a, puis encore une fois supplémentaire selon le même principe, dit d'auto-similarité. Ce principe de construction fractale est bien connu, si bien qu'il n'est pas nécessaire de le détailler plus. Le panneau insonorisant 10 de la figure 2b est obtenu de cette façon, où les carrés qui sont noircis correspondent tous à des zones du panneau 10 dans lesquelles l'âme 3 est remplie d'éléments modificateurs 4. L'âme 3 est dépourvue d'éléments modificateurs en dehors de ces carrés noircis. L'ordre fractal de la répartition des éléments modificateurs est maintenant égal à trois, et le taux de remplissage surfacique du panneau avec des éléments modificateurs est 0,298.

La figure 3 correspond à la figure 2b, mais pour un motif de base dit «de Vicsek». L'ordre fractal de la répartition des éléments modificateurs 4 est encore égal à trois, mais le taux de remplissage surfacique du panneau 10 avec des éléments modificateurs est 0,171 en utilisant ce motif de base. Ce motif de Vicsek peut être préféré à celui de Sierpinski de la figure 2b, parce qu'il produit un alourdissement inférieur du panneau à ordre fractal équivalent et pour des mêmes éléments modificateurs qui sont utilisés.

La répartition qui est voulue selon l'invention pour les éléments modificateurs 4 dans l'âme 3 du panneau 10 peut être réalisée en utilisant le principe du pochoir. L'âme 3 est fixée sur la paroi externe 1, par exemple par collage, et le panneau 10 dans cet état d'assemblage partiel est disposé horizontalement, avec l'âme 3 qui est exposée vers le haut. Un masque pourvu d'ouvertures est alors placé par-dessus le panneau 10, sur l'âme 3, et des éléments modificateurs 4 sont étalés avec excès par-dessus le masque dans ce mode de réalisation. Les éléments modificateurs 4 comblent alors les alvéoles 30 de la structure en nid d'abeille qui constitue l'âme 3 à travers les ouvertures du masque. Puis l'excès d'éléments modificateurs est retiré, par exemple par raclage de la surface supérieure du masque. Pratiquement, lorsque l'âme 3 possède une structure alvéolaire avec une taille des alvéoles 30 qui est fixe, la valeur maximale de l'ordre fractal qui peut être réalisée est limitée par cette taille des alvéoles. Cette limitation est due à la diminution en taille du motif de base à chaque fois qu'il est répété pour produire une unité supplémentaire pour l'ordre fractal, et une telle répétition n'est possible que si le motif de base est encore suffisamment plus grand que les alvéoles.

Plus précisément, un panneau insonorisant possède des modes propres de vibration par flexion qui sont caractérisés chacun par un nombre de ventres de vibration, et par les positions de ces ventres de vibration dans la surface du panneau. L'onde acoustique incidente OI qui arrive sur le panneau 10 excite plusieurs modes propres de vibration de celui-ci, avec des amplitudes et des déphasages de ces modes propres qui sont fixés par les positions des ventres de vibration pour ces modes propres, les uns par rapport aux autres.

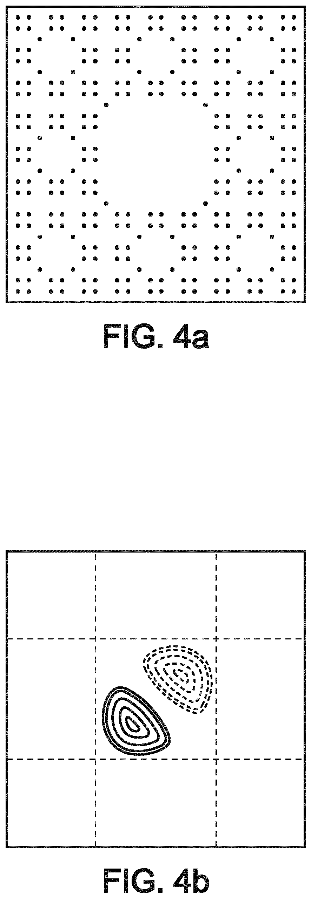

Selon l'invention, les éléments modificateurs 4 sont disposés dans l'âme 3 selon une répartition fractale sélectionnée pour conférer une amplitude de vibration qui est nulle à certains des ventres de modes propres. Autrement dit, certains ventres de vibration sont supprimés, et ce pour au moins un mode propre du panneau. Ces ventres de vibration qui sont supprimés sont situés en dehors d'une zone restreinte à l'intérieur du panneau. Cette zone, où les ventres de vibration pour le mode propre concerné sont conservés, est entourée par des éléments modificateurs qui appartiennent à la répartition fractale. La figure 4a est analogue à la figure 2b pour un autre motif fractal de Sierpinski, et la figure 4b montre une déformation du panneau de la figure 4a selon un mode propre particulier de vibration par flexion. L'ordre fractal est encore égal à 3. Lorsque l'invention n'est pas mise en oeuvre, par exemple lorsque les éléments modificateurs sont répartis uniformément dans toute la surface du panneau, chaque mode propre possède des ventres de vibration par flexion qui recouvrent ensemble toute la surface du panneau. La figure 4b montre que le mode propre qui est représenté ne possède que deux ventres qui sont localisés à l'intérieur du carré central, lorsque le panneau est divisé en trois colonnes et trois lignes de mêmes largeurs. Les lignes de niveaux continues qui sont indiquées dans la figure 4b, et les lignes de niveaux en traits interrompus indiquent que les deux ventres vibrent en opposition de phase. La suppression des ventres dans les huit carrés périphériques est obtenue grâce à la répartition fractale des éléments modificateurs, conforme à la figure 4a.

Chaque mode propre de vibration par flexion du panneau 10 possède une caractéristique d'émission acoustique. L'onde acoustique OT qui est transmise par le panneau 10 résulte de contributions qui sont produites par tous les modes propres excités par l'onde incidente OI. Ces contributions se combinent selon le principe des interférences acoustiques, qui dépendent des zones du panneau d'où proviennent les contributions de chaque mode propre. Or ces zones sont les positions des ventres de vibration de chaque mode propre. Ainsi, en permettant de supprimer certains ventres de vibration pour des modes propres du panneau 10, la répartition fractale des éléments modificateurs 4 permet de contrôler l'énergie de l'onde acoustique OT qui est transmise par le panneau 10, à partir de l'onde acoustique incidente OI. Tous les modes propres de vibration par flexion peuvent être déterminés théoriquement ou par simulation numérique à l'aide d'un ordinateur, avec les positions et les amplitudes de leurs ventres de vibration. De même, l'onde OT qui est transmise peut être reconstruite mathématiquement en combinant les contributions des modes propres qui ont été excités par l'onde incidente OI, encore par simulation numérique.

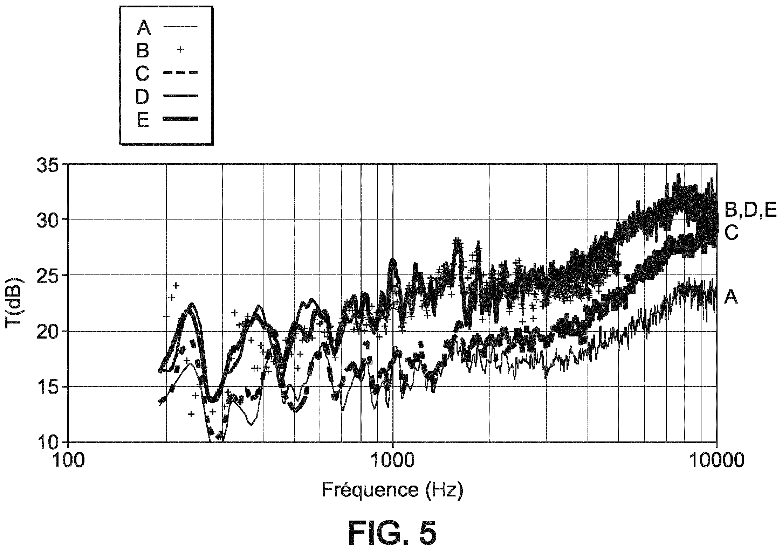

Le diagramme de la figure 5 montre l'affaiblissement énergétique de l'onde OT qui est transmise, par rapport à l'onde incidente OI pour cinq panneaux insonorisants, tel que cet affaiblissement a été mesuré expérimentalement. Cet affaiblissement est noté T et exprimé en décibels (dB) selon l'axe vertical. L'axe horizontal repère la fréquence de l'onde incidente OI, exprimée en hertz (Hz). Les cinq panneaux utilisés pour ce diagramme ont des parois externes en matériau composite et une âme en nid d'abeille qui sont similaires d'un panneau à l'autre. Leurs dimensions périphériques communes sont 0,9 m (mètre) x 0,9 m. Ces panneaux sont distincts de la façon suivante, en les repérant par leurs références de légende :
A : premier panneau de référence, dont l'âme est dépourvue d'éléments modificateurs dans toute la surface du panneau
B : second panneau de référence, dont l'âme est remplie d'éléments modificateurs formés par des sphères rigides, dans toute la surface du panneau
C : premier panneau conforme à l'invention, dont l'âme est remplie d'éléments modificateurs formés par des sphères rigides, selon la répartition fractale de la figure 3
D : second panneau conforme à l'invention, dont l'âme est remplie des mêmes éléments modificateurs que le panneau C, mais selon la répartition fractale de la figure 2a
E : troisième panneau conforme à l'invention, dont l'âme est remplie d'éléments modificateurs formés par des sphères souples, mais encore selon la répartition fractale de la figure 2a

Les sphères des éléments modificateurs qui sont utilisés peuvent être en polymère lorsqu'elles sont rigides, ou en élastomère lorsqu'elles sont souples.

L'affaiblissement acoustique du panneau B est supérieur à celui du panneau A, à cause de l'effet de lest qui est procuré par les sphères rigides.

L'affaiblissement acoustique du panneau C est intermédiaire à ceux des panneaux A et B au dessus de 2000 Hz, et comparable à celui du panneau A en dessous de cette valeur de fréquence.

Les panneaux D et E ont des affaiblissements acoustiques qui sont comparables entre eux entre 200 Hz et 10 000 Hz, et comparables aussi à celui du panneau B.

L'atténuation acoustique du panneau C est inférieure à celles des panneaux B, D et E, en partie parce que son taux de lest est inférieur.

Grâce à l'effet de la répartition fractale des éléments modificateurs dans les panneaux D et E, les affaiblissements acoustiques qu'ils procurent sont sensiblement aussi bons que celui du panneau B alors que leur taux de lest sont fortement plus bas.

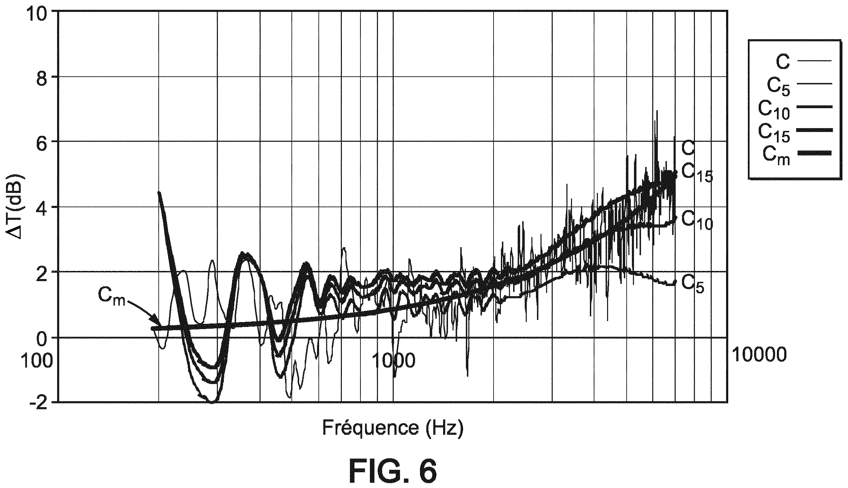

Enfin, le diagramme de la figure 6 montre les écarts d'affaiblissement énergétique ΔT qui sont calculés par simulation numérique, pour le panneau C et pour trois panneaux supplémentaires, par rapport au panneau A décrit ci-dessus. Le même intervalle de fréquence acoustique est considéré : entre 200 Hz et 10 000 Hz. Les trois panneaux supplémentaires, qui sont référencés C₅, C₁₀ et C₁₅, sont identiques au panneau C quant à la répartition fractale des éléments modificateurs et quant au pouvoir de lest de ceux-ci. Mais un pouvoir d'amortissement des vibrations du panneau par flexion est ajouté, et varié de la façon suivante :
C : pouvoir d'amortissement nul pour les sphères rigides
C₅, C₁₀ et C₁₅ : amortissement par les éléments modificateurs correspondant à un facteur de perte de 5%, 10% et 15%, respectivement

La courbe lisse, notée Cₘ, est une courbe moyenne pour la panneau C. La comparaison des valeurs d'affaiblissement pour les quatre panneaux C, C₅, C₁₀ et C₁₅ montre que le pouvoir d'amortissement des éléments modificateurs n'a pas d'effet significatif par rapport à l'effet de la répartition fractale de ces éléments.

Il est entendu que la présente invention peut être reproduite en en modifiant certains aspects par rapport aux modes de réalisation qui ont été décrits en détail, mais tout en conservant une partie au moins des avantages qui ont été cités. Parmi les modifications possibles, les suivantes sont citées :
- des motifs de base pour la répartition fractale des éléments modificateurs, autres que les motifs de Sierpinski et de Vicsek, peuvent être utilisés ;
- l'ordre fractal de la répartition des éléments modificateurs peut être quelconque, égal à un, préférablement égal à deux, encore plus préférablement égal à trois, etc ;

- l'âme peut avoir une configuration autre que celle d'une structure en nid d'abeille ;
- le panneau peut avoir une courbure générale quelconque, une limite périphérique de forme quelconque, et comporter des ouvertures dans sa surface ;
- les deux parois externes peuvent avoir des compositions variables, identiques ou non d'une paroi à l'autre ; et
- le mode d'assemblage de chaque paroi avec l'âme peut être quelconque, à condition qu'il permette que des contraintes de cisaillement soient transmises entre ces trois composants.

Enfin, il est aussi entendu que l'invention peut être combinée avec des modes quelconques de fixation du panneau insonorisant sur une structure porteuse. En particulier, le panneau peut être accroché par des supports localisés, ou des appuis ponctuels, ou peut être encastré au niveau de son bord périphérique dans un cadre de maintien. Les modes propres de vibration du panneau par flexion peuvent alors être en partie déterminés par son mode de fixation, et l'invention s'applique aux modes propres qui sont ainsi déterminés. De façon générale, l'onde acoustique qui est transmise par le panneau, telle que considérée dans la présente invention, ne prend pas en compte une transmission acoustique additionnelle qui serait produite directement par des éléments de fixation du panneau.

## Revendications

1. Panneau insonorisant (10) efficace en transmission et à structure sandwich, comprenant :
- deux parois externes (1, 2) parallèles l'une à l'autre ;
- une âme (3) connectée rigidement aux parois externes de sorte que des contraintes de cisaillement soient transmises entre ladite âme et chacune des parois externes, et l'âme maintenant les parois externes à distance l'une de l'autre de façon à limiter un espace intermédiaire ; et
- des éléments modificateurs (4) contenus dans l'espace intermédiaire, et maintenus par l'âme à des emplacements fixes par rapport à des directions parallèles aux parois externes ;
dans lequel une onde acoustique (OI) qui est incidente sur une des parois externes (1) est transformée en une vibration stationnaire du panneau (10) par flexion, ladite vibration stationnaire étant une superposition de modes propres du panneau qui sont excités par l'onde acoustique incidente, et une onde acoustique transmise (OT) qui émerge à partir de l'autre paroi externe (2) résulte de contributions d'émission générées par les modes propres excités,
le panneau étant **caractérisé en ce que** les emplacements des éléments modificateurs (4) forment, en projection sur une surface parallèle aux parois externes (1, 2), une répartition fractale avec un motif de base qui est mis en oeuvre au moins une fois par auto-similarité, ladite répartition fractale étant telle que des modes propres de vibration par flexion du panneau, dits modes concentrés, n'ont de ventres de vibration à amplitude non-nulle qu'à l'intérieur d'une zone restreinte du panneau qui est circonscrite par certains au moins des éléments modificateurs contribuant à la répartition fractale,
si bien que l'onde acoustique transmise (OT) ne résulte que de contributions d'émission qui sont générées à l'intérieur de ladite zone restreinte du panneau lorsque les modes propres excités sont tous des modes concentrés.

2. Panneau selon la revendication 1, dans lequel le motif de base est mis en oeuvre au moins trois fois par auto-similarité pour former la répartition fractale des éléments modificateurs (4).

3. Panneau selon la revendication 1 ou 2, dans lequel le motif de base est un motif de Vicsek ou un motif de Sierpinski.

4. Panneau selon l'une quelconque des revendications précédentes, dans lequel les éléments modificateurs (4) comprennent des sphères, préférentiellement des sphères creuses, des éléments à ressorts, ou des portions de matériau viscoélastique.

5. Panneau selon l'une quelconque des revendications précédentes, dans lequel l'âme (3) possède une structure alvéolaire, et les éléments modificateurs (4) sont contenus dans une sélection d'alvéoles (30) de ladite structure, ladite sélection des alvéoles formant la répartition fractale des éléments modificateurs.

6. Panneau selon la revendication 5, dans lequel l'âme (3) possède une structure en nid d'abeille.

7. Panneau selon l'une quelconque des revendications précédentes, ledit panneau étant courbe dans au moins une direction parallèle audit panneau.

8. Panneau selon l'une quelconque des revendications précédentes, adapté pour former au moins une partie d'un habillage interne d'habitacle ou de cabine.

9. Panneau selon la revendication 8, adapté pour être disposé à l'intérieur d'une cabine d'avion ou d'un habitable d'aéronef à voilure tournante.

## Patentansprüche

1. Schalldichte Platte (10), die in Bezug auf Übertragung wirksam ist und eine Sandwichstruktur aufweist, umfassend:
- zwei parallel zueinander angeordnete Außenwände (1, 2);
- einen Kern (3), der fest mit den Außenwänden verbunden ist, sodass Schubspannungen zwischen dem Kern und jeder der Außenwände übertragen werden, und wobei der Kern die Außenwände in einem Abstand voneinander hält, um so einen Zwischenraum zu begrenzen; und
- Modifizierungselemente (4), die in dem Zwischenraum enthalten sind und von dem Kern an festen Positionen in Bezug auf zu den Außenwänden parallelen Richtungen gehalten werden;
wobei eine akustische Welle (OI), die auf eine der Außenwände (1) trifft, durch Biegen in eine stationäre Schwingung der Platte (10) umgewandelt wird, wobei die stationäre Schwingung eine Überlagerung von plattenspezifischen Modi darstellt, die durch die auftreffende akustische Welle angeregt werden, und eine übertragene akustische Welle (OT), die aus der anderen Außenwand (2) austritt, aus Emissionsbeiträgen resultiert, die durch die spezifischen angeregten Modi erzeugt werden,
wobei die Platte **dadurch gekennzeichnet ist, dass** die Positionen der Modifizierungselemente (4) in Projektion auf eine zu den Außenwänden (1, 2) parallele Fläche eine fraktale Verteilung mit einem Grundmuster bilden, das mindestens einmal durch Selbstähnlichkeit umgesetzt wird, wobei die fraktale Verteilung so ist, dass spezifische Schwingungsmodi durch Biegen der Platte, so genannte konzentrierte Modi, nur innerhalb eines begrenzten Bereichs der Platte, der von mindestens einigen der Modifizierungselemente, die zur fraktalen Verteilung beitragen, beschränkt wird, Schwingungsbäuche mit einer Amplitude ungleich Null aufweisen,
sodass die übertragene akustische Welle (OT) nur aus Emissionsbeiträgen resultiert, die innerhalb des begrenzten Bereichs der Platte erzeugt werden, wenn die spezifischen angeregten Modi alle konzentrierte Modi darstellen.

2. Platte nach Anspruch 1, wobei das Grundmuster mindestens dreimal durch Selbstähnlichkeit umgesetzt wird, um die fraktale Verteilung der Modifizierungselemente (4) zu bilden.

3. Platte nach Anspruch 1 oder 2, wobei es sich bei dem Grundmuster um ein Vicsek-Muster oder ein Sierpinski-Muster handelt.

4. Platte nach einem der vorstehenden Ansprüche, wobei die Modifizierungselemente (4) Kugeln, vorzugsweise Hohlkugeln, Federelemente oder Abschnitte aus viskoelastischem Material umfassen.

5. Platte nach einem der vorstehenden Ansprüche, wobei der Kern (3) eine Zellenstruktur aufweist und die Modifizierungselemente (4) in einer Auswahl von Zellen (30) der Struktur enthalten sind, wobei die Auswahl von Zellen die fraktale Verteilung der Modifizierungselemente bildet.

6. Platte nach Anspruch 5, wobei der Kern (3) eine Wabenstruktur aufweist.

7. Platte nach einem der vorstehenden Ansprüche, wobei die Platte in mindestens einer zu der Platte parallelen Richtung gekrümmt ist.

8. Platte nach einem der vorstehenden Ansprüche, die dazu geeignet ist, mindestens einen Teil einer Innenverkleidung für einen Fahrgastraum oder eine Fahrgastkabine zu bilden.

9. Platte nach Anspruch 8, die dazu geeignet ist, in einer Flugzeugkabine oder einem bewohnbaren Teil eines Drehflügelflugzeugs angeordnet zu werden.

## Claims

1. Soundproof panel (10) that is transmission-efficient and has a sandwich structure, comprising:
- two outer walls (1, 2) parallel to one another;
- a core (3) rigidly connected to the outer walls so that shear stresses are transmitted between said core and each of the outer walls, and the core maintaining the outer walls apart from each other so as to delimit an intermediate space; and
- modifying elements (4) contained in the intermediate space, and maintained by the core at locations which are fixed with respect to directions parallel to the outer walls;
in which an acoustic wave (IW) which is incident onto one on the outer walls (1) is transformed into a stationary bending vibration of the panel (10), said stationary vibration being a superposition of normal modes of the panel that are excited by the incident acoustic wave, and a transmitted acoustic wave (TW) which emerges from the other outer wall (2) results from emission contributions generated by the excited normal modes,
the panel being **characterized in that** the locations of the modifying elements (4) in projection onto a surface parallel to the outer walls (1, 2) form a fractal distribution with a base pattern which is implemented by autosimilarity at least once, said fractal distribution being such that normal modes of bending vibration of the panel, called concentrated modes, have vibration antinodes with non-zero amplitude only inside a restricted zone of the panel which is surrounded by at least some of the modifying elements contributing to the fractal distribution,
so that the transmitted acoustic wave (TW) results only from emission contributions which are generated inside said restricted zone of the panel when the excited normal modes are all concentrated modes.

2. Panel according to claim 1, in which the base pattern is implemented by autosimilarity at least three times in order to form the fractal distribution of the modifying elements (4).

3. Panel according to claim 1 or 2, in which the base pattern is a Vicsek pattern or a Sierpinski pattern.

4. Panel according to any one of the preceding claims, in which the modifying elements (4) comprise spheres, preferably hollow spheres, spring elements or portions of viscoelastic material.

5. Panel according to any one of the preceding claims, in which the core (3) has a cellular structure, and the modifying elements (4) are contained within a selection of cells (30) of said structure, said selection of cells forming the fractal distribution of the modifying elements.

6. Panel according to claim 5, in which the core (3) has a honeycomb structure.

7. Panel according to any one of the preceding claims, said panel being curved in at least one direction parallel to said panel.

8. Panel according to any one of the preceding claims, adapted to form at least part of an interior lining of a cockpit or cabin.

9. Panel according to claim 8, adapted in order to be arranged inside a cabin of an aeroplane or a cockpit of a rotorcraft.
